# EUROPÄISCHE PATENTSCHRIFT

(11) **EP 3 573 870 B1**
(45) Veröffentlichungstag und Bekanntmachung des Hinweises auf die Patenterteilung: **28.07.2021**
(21) Anmeldenummer: 17803867.5
(22) Anmeldetag: 15.11.2017
(51) Int. Cl.: B60T 13/74, B60T 7/12

(54) **VERFAHREN ZUM AKTIVIEREN EINER FESTSTELLBREMSE EINES KRAFTFAHRZEUGS SOWIE SYSTEM ZUR STEUERUNG EINER FESTSTELLBREMSE EINES KRAFTFAHRZEUGS**
METHOD FOR ACTIVATING A PARKING BRAKE OF A MOTOR VEHICLE, AND SYSTEM FOR CONTROLLING A PARKING BRAKE OF A MOTOR VEHICLE
PROCÉDÉ D'ACTIVATION D'UN FREIN DE STATIONNEMENT D'UN VÉHICULE AUTOMOBILE AINSI QUE SYSTÈME DE COMMANDE D'UN FREIN DE STATIONNEMENT D'UN VÉHICULE AUTOMOBILE

(30) Priorität: 24.01.2017 DE 102017201066
(43) Veröffentlichungstag der Anmeldung: 04.12.2019
(73) Patentinhaber: Audi AG, 85045 Ingolstadt (DE)
(72) Erfinder: ERNST, Herbert, 02906 Niesky (DE)
(86) Internationale Anmeldenummer: PCT/EP2017/079311
(87) Internationale Veröffentlichungsnummer: WO 2018/137808

(56) Entgegenhaltungen:
- EP-A1- 2 698 294
- DE-A1-102004 050 052
- DE-A1-102011 003 183
- DE-A1-102016 102 123
- DE-U1-202013 005 826
- US-A- 5 521 442
- US-A1- 2016 362 089

## Beschreibung

Die Erfindung betrifft ein Verfahren zum Aktivieren einer Feststellbremse eines Kraftfahrzeugs gemäß der im Oberbegriff des Patentanspruches 1 angegebenen Art.

Elektrische Feststellbremsen, nachfolgend auch als elektromechanische Feststellbremsen oder auch als elektrische Parkbremsen bezeichnet, und entsprechende Verfahren zum selbsttätigen Aktivieren der Feststellbremse, wenn das Kraftfahrzeug sich im Stillstand befindet und/oder die Zündung ausgeschaltet ist, sind aus dem Stand der Technik hinreichend bekannt. Lediglich beispielhaft wird auf die DE 103 57 121 A1 verwiesen.

Ein bekanntes Problem bei elektrischen Parkbremsen ist das Befahren von Waschstraßen, da nach dem Einfahren des Kraftfahrzeugs in die Waschstraße und bei dem dabei auftretenden kurzen Stillstand des Fahrzeugs die Feststellbremse automatisch aktiviert wird, mit der Folge, dass das Kraftfahrzeug nicht mehr durch die Waschstraße gezogen werden kann, ohne die Feststellbremse wieder zu lösen.

Aus der DE 10 2013 209 242 A1 ist ein Verfahren zur Aktivierung und/oder Deaktivierung ein oder mehrerer Fahrerassistenzfunktionen, nämlich einer Einparkhilfe und/oder eine Adaptive Cruise Control (ACC), in Waschstraßen offenbart. Das Verfahren sieht vor, dass eine Vielzahl von Indizien dafür ermittelt werden, dass sich das Fahrzeug in einer Waschanlage oder einer Waschstraße befindet und dass die Einparkhilfe und/oder die Adaptive Cruise Control (ACC) in Abhängigkeit von der Vielzahl der ermittelten Indizien deaktiviert wird.

Die DE 10 2011 003 183 A1 offenbart ein Verfahren zur Überwachung der Funktion einer Feststellbremse in einem Fahrzeug. Das Verfahren zeichnet sich dadurch aus, dass nach Betätigen der Feststellbremse der Bewegungszustand des Fahrzeugs überwacht und im Falle einer Fahrzeugbewegung ein Warnsignal erzeugt wird.

Die DE 10 2016 102 123 A1 offenbart ein Fahrzeugsystem, umfassend eine Verarbeitungsvorrichtung, die dazu programmiert ist, ein erstes Benutzereingabesignal zu empfangen und einen Autowaschmodus als Reaktion auf das Empfangen des ersten Benutzereingabesignals zu aktivieren. Das Aktivieren des Autowaschmodus umfasst das vorübergehende Deaktivieren mindestens eines Fahrzeugsicherheitssystems.

In der US 2016/0362089 A1 ist eine Steuervorrichtung für ein Auto offenbart. Die Steuereinrichtung umfasst eine Positionsbestimmungseinheit, die konfiguriert ist, um zu bestimmen, ob sich eine Position des Fahrzeugs in der Nähe einer Autowaschanlage befindet. Die Steuervorrichtung umfasst ferner eine Schaltbestimmungseinheit, die zum Bestimmen einer Schaltposition einer Getriebevorrichtung des Fahrzeugs konfiguriert ist. Die Steuervorrichtung umfasst ferner eine Bremsbestimmungseinheit, die konfiguriert ist, um die Aktivierung einer Bremsvorrichtung des Fahrzeugs zu bestimmen. Die Steuervorrichtung umfasst ferner eine Steuereinheit. Die Steuereinheit ist konfiguriert, um zu bestimmen, dass eine Bedingung zum Implementieren einer Autowaschvorbereitung erfüllt ist, wenn die Positionsbestimmungseinheit bestimmt, dass sich die Position des Fahrzeugs in der Nähe der Autowaschanlage befindet, wenn die Schaltbestimmungseinheit bestimmt, dass sich die Schaltposition in einer neutralen Position befindet, und wenn die Bremsbestimmungseinheit bestimmt, dass die Bremsvorrichtung deaktiviert ist.

Der Erfindung liegt die Aufgabe zu Grunde, ein Verfahren zum Aktivieren einer elektrischen Feststellbremse eines Kraftfahrzeugs gemäß der im Oberbegriff des Patentanspruches 1 angegebenen Art derart weiterzubilden, dass in Situationen, die eine Rollfähigkeit des Kraftfahrzeugs erfordern, die Rollfähigkeit des Kraftfahrzeugs gewährleistet ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

Gemäß dem Verfahren wird in bekannter Art und Weise die elektrische Feststellbremse selbsttätig aktiviert, wenn sich das Kraftfahrzeug im Stillstand befindet und/oder die Zündung ausgeschaltet ist.

Erfindungsgemäß ist vorgesehen, dass nach dem selbsttätigen Aktivieren der Feststellbremse eine aktuelle Kraftfahrzeug- und/oder Umgebungssituation ermittelt wird und dass die ermittelte aktuelle Kraftfahrzeug- und/oder Umgebungssituation mit hinterlegten Kraftfahrzeug- und/oder Umgebungssituationen verglichen wird, für die eine Rollfähigkeit des Kraftfahrzeugs im Stillstand und/oder bei ausgeschalteter Zündung vorgesehen ist, wobei - wenn die ermittelte aktuelle Kraftfahrzeug- und/oder Umgebungssituation einer hinterlegten, eine Rollfähigkeit des Kraftfahrzeugs erfordernde Kraftfahrzeug- und/oder Umgebungssituation entspricht - dem Fahrzeugführer signalisiert, dass die Feststellbremse zu deaktivieren ist, oder die Feststellbremse selbsttätig deaktiviert wird.

Das erfindungsgemäße Verfahren erweist sich als besonders vorteilhaft, da nunmehr Situationen, die eine Rollfähigkeit des Kraftfahrzeugs erfordern, wie z.B. wenn sich das Kraftfahrzeug in einer Waschstraße befindet, nach der Aktivierung der Feststellbremse erkannt werden, so dass eine situative Deaktivierung der Feststellbremse ermöglicht wird.

. Hierdurch ist gewährleistet, dass - wenn z.B. sich das Kraftfahrzeug in einer Waschstraße befindet - der Fahrzeugführer frühzeitig auf die Problematik der erforderlichen Rollfähigkeit hingewiesen wird und entsprechend ausreichend Zeit hat, die Feststellbremse manuell wieder zu lösen. Bzw. - im Falle der selbststätigen Deaktivierung - der Fahrzeugführer keine weiteren Maßnahmen zur Lösung der Feststellbremse ergreifen muss und somit gegebenenfalls auftretende "Paniksituationen", wie z.B. dass nach Befahren der Waschstraße, Schließen der Feststellbremse und anschließender Signalisierung, dass die Feststellbremse zu deaktivieren ist, der Kraftfahrzeugführer das Gefühl hat, die Deaktivierungsfunktion nicht schnell genug zu finden, ausgeschlossen sind..

Bevorzugt wird der Fahrzeugführer über ein optisches und/oder akustisches Signal darauf hingewiesen, dass die Feststellbremse zu deaktivieren ist.

Verzugsweise wird die aktuelle Kraftfahrzeug- und/oder Umgebungssituation aus Umfeldsensorik-Daten und/oder GPS-Daten und/oder Car2X-Daten ermittelt. Dies hat den Vorteil, dass aufgrund der Datenredundanz eine hohe Genauigkeit bei der Ermittlung der aktuellen Kraftfahrzeug- und/oder Umgebungssituation gewährleistet ist.

Gemäß einer besonders vorteilhaften Ausführungsform der Erfindung werden die Umfeldsensorik-Daten von einer im Kraftfahrzeug vorhandenen Kamera und/oder einem im Kraftfahrzeug vorhandenen Abstandssensor (Radar) zur Verfügung gestellt. Vorteilhaft hierbei ist, dass im Premiumsegment eine Kamera und ein Abstandssensor in der Regel standardmäßig vorgesehen sind, so dass für die Ermittlung der aktuellen Kraftfahrzeug- und/oder Umgebungssituation ein Einbau separater bzw. zusätzlicher Sensoren nicht erforderlich ist.

Ein System zur Steuerung einer Feststellbremse eines Kraftfahrzeugs, das ein bedarfsgerechtes Deaktivieren der Feststellbremse ermöglicht, umfasst ein Steuergerät, welches bei Stillstand und/oder ausgeschalteter Zündung die Feststellbremse aktiviert.

Nach Aktivierung der Feststellbremse durch das Steuergerät, wird dem Steuergerät als eine weitere Eingangsgröße eine ermittelte aktuelle Kraftfahrzeug- und/oder Umgebungssituation zur Verfügung gestellt, wobei das Steuergerät eingerichtet ist, einen Vergleich der ermittelten aktuellen Kraftfahrzeug- und/oder Umgebungssituation mit im Steuergerät hinterlegten Referenzsituationen, die eine Rollfähigkeit des Kraftfahrzeugs erfordern, durchzuführen.

Durch das System ist somit sichergestellt, dass nach Aktivierung der elektrischen Feststellbremse eine Überprüfung stattfindet, ob eine Rollfähigkeit erforderlich ist, so dass ein situatives Deaktivieren der Feststellbremse ermöglicht wird.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:

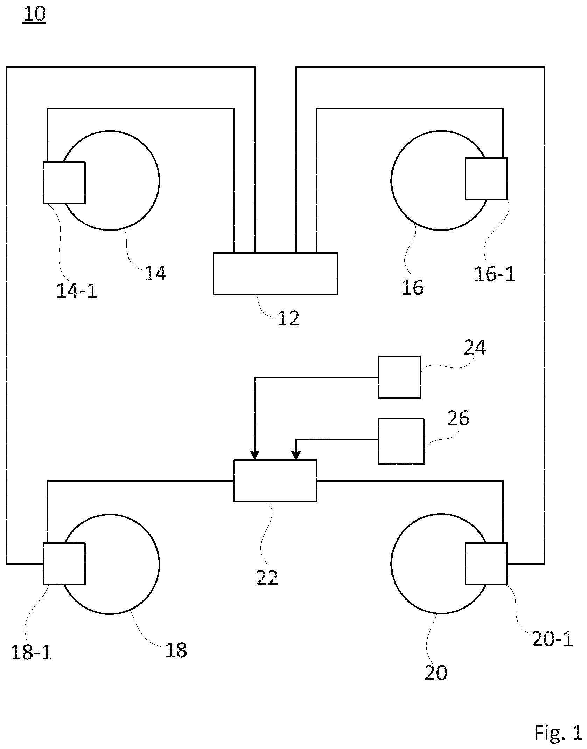

- Fig. 1: eine schematische Darstellung eines Bremssystems eines Kraftfahrzeugs mit elektrischer Feststellbremse.

Fig. 1 zeigt ein insgesamt mit der Bezugsziffer 10 bezeichnetes Bremssystem für ein Kraftfahrzeug. Das Bremssystem 10 verfügt über ein ABS-Steuergerät 12, über das in bekannter Art und Weise die den Rädern 14, 16, 18 und 20 zugeordneten Bremsen 14-1, 16-1, 18-1 und 20-1 steuer-/regelbar sind.

Weiterhin umfasst das Bremssystem 10 ein Steuergerät 22 für die Funktion elektrische Feststellbremse, über das die Bremsen 18-1 und 20-1 der Räder 18 und 20 steuer-/regelbar sind.

Über das Steuergerät 22 wird die Feststellbremsfunktion der Bremsen 18-1 und 20-1 aktiviert, wenn das Fahrzeug steht.

Wie Fig. 1 weiter zeigt, werden dem Steuergerät 22 als Eingangsgrößen zudem noch Daten einer Kamera 24 und eines Abstandssensors 26 zur Verfügung gestellt.

Befindet sich nun das Kraftfahrzeug, z.B. nach Befahren einer Waschstraße, im Stillstand, wird über das Steuergerät 22 für die Bremsen 18-1 und 20-1 der Räder 18 und 20 die Funktion elektrische Feststellbremse aktiviert.

Nach der selbsttätigen Aktivierung der Feststellfunktion wird im Steuergerät 22 anhand der Eingangsgrößen aus der Kamera 24 und des Abstandssensors 26 die aktuelle Kraftfahrzeug- und Umgebungssituation ermittelt. Anschließend wird die ermittelte aktuelle Kraftfahrzeug- und Umgebungssituation mit im Steuergerät 22 hinterlegten Referenzsituationen, die eine Rollfähigkeit des Kraftfahrzeugs im Stillstand oder ausgeschalteter Zündung erfordern, beispielsweise die Situation, wenn sich das Kraftfahrzeug in einer Waschstraße befindet, verglichen.

Nachdem durch den Vergleich vorliegend festgestellt wurde, dass eine Rollfähigkeit des Kraftfahrzeugs erforderlich ist, wird dem Kraftfahrzeugführer akustisch und optisch mitgeteilt, dass die Feststellbremse zu deaktivieren ist und über das Steuergerät 22 wird die Funktion elektrische Feststellbremse der Bremsen 18-1 und 20-1 der Räder 18 und 20 wieder deaktiviert.

## Patentansprüche

1. Verfahren zum Aktivieren einer Feststellbremse (18-1, 20-1) eines Kraftfahrzeugs, wobei die Feststellbremse (18-1, 20-1) selbsttätig aktiviert wird, wenn das Kraftfahrzeug sich im Stillstand befindet oder die Zündung ausgeschaltet ist, **dadurch gekennzeichnet, dass** nach dem selbsttätigen Aktivieren der Feststellbremse (18-1, 20-1) eine aktuelle Kraftfahrzeug- und/oder Umgebungssituation ermittelt wird und mit hinterlegten Kraftfahrzeug- und/oder Umgebungssituationen verglichen wird, für die eine Rollfähigkeit des Kraftfahrzeugs im Stillstand oder ausgeschalteter Zündung vorgesehen ist, wobei - wenn die ermittelte aktuelle Kraftfahrzeug- und/oder Umgebungssituation einer hinterlegten, eine Rollfähigkeit des Kraftfahrzeugs erfordernde Kraftfahrzeug- und/oder Umgebungssituation entspricht - dem Fahrzeugführer signalisiert wird, dass die Feststellbremse (18-1, 20-1) zu deaktivieren ist, oder die Feststellbremse (18-1, 20-1) selbsttätig deaktiviert wird.

2. Verfahren nach Anspruch 1, **dadurch gekennzeichnet, dass** das Deaktivieren der Feststellbremse (18-1, 20-1) dem Fahrzeugführer optisch und/oder akustisch signalisiert wird.

3. Verfahren nach Anspruch 1, **dadurch gekennzeichnet, dass** die aktuelle Kraftfahrzeug- und/oder Umgebungssituation aus Umfeldsensorik-Daten und/oder GPS-Daten und/oder Car2X-Daten ermittelt wird.

4. Verfahren nach Anspruch 3, **dadurch gekennzeichnet, dass** die Umfeldsensorik-Daten von einer im Kraftfahrzeug vorhandenen Kamera (24) und/oder einem im Kraftfahrzeug vorhandenen Abstandssensor (26) zur Verfügung gestellt werden.

## Claims

1. Method for activating a parking brake (18-1, 20-1) of a motor vehicle, wherein the parking brake (18-1, 20-1) is activated automatically when the motor vehicle is at a standstill or the ignition is switched off, **characterised in that** after the automatic activation of the parking brake (18-1, 20-1) a current motor vehicle and/or surroundings situation is determined and is compared with stored motor vehicle and/or surroundings situations for which a rolling capacity of the motor vehicle at a standstill or with switched-off ignition is provided, wherein - when the determined current motor vehicle and/or surroundings situation corresponds to a stored motor vehicle and/or surroundings situation requiring a rolling capacity of the motor vehicle - it is signalled to the vehicle driver that the parking brake (18-1, 20-1) is to be deactivated, or the parking brake (18-1, 20-1) is automatically deactivated.

2. Method according to claim 1, **characterised in that** the deactivation of the parking brake (18-1, 20-1) is signalled optically and/or acoustically to the vehicle driver.

3. Method according to claim 1, **characterised in that** the current motor vehicle and/or surroundings situation is determined from environmental sensor data and/or GPS data and/or Car2X data.

4. Method according to claim 3, **characterised in that** the environmental sensor data are made available by a camera (24) present in the motor vehicle and/or a distance sensor (26) present in the motor vehicle.

## Revendications

1. Procédé d'activation d'un frein de stationnement (18-1, 20-1) d'un véhicule automobile, dans lequel le frein de stationnement (18-1, 20-1) est activé automatiquement, lorsque le véhicule automobile se trouve à l'arrêt ou l'allumage est éteint, **caractérisé en ce qu'**après l'activation automatique du frein de stationnement (18-1, 20-1) une situation du véhicule automobile et/ou de l'environnement actuelle est déterminée et est comparée avec des situations du véhicule automobile et/ou de l'environnement enregistrées, pour lesquelles une capacité de roulement du véhicule automobile est prévue à l'arrêt ou lorsque l'allumage est éteint, dans lequel - lorsque la situation du véhicule automobile et/ou de l'environnement actuelle déterminée correspond à une situation du véhicule automobile et/ou de l'environnement enregistrée, nécessitant une capacité de roulement du véhicule automobile - il est signalé au conducteur du véhicule, que le frein de stationnement (18-1, 20-1) est à désactiver, ou le frein de stationnement (18-1, 20-1) est désactivé automatiquement.

2. Procédé selon la revendication 1, **caractérisé en ce que** la désactivation du frein de stationnement (18-1, 20-1) est signalé au conducteur du véhicule de manière optique et/ou acoustique.

3. Procédé selon la revendication 1, **caractérisé en ce que** la situation du véhicule automobile et/ou de l'environnement actuelle est déterminée à partir des données de capteur environnemental et/ou des données GPS et/ou des données Car2X.

4. Procédé selon la revendication 3, **caractérisé en ce que** les données de capteur environnemental sont mises à la disposition d'une caméra (24) présente dans le véhicule automobile et/ou un capteur de distance (26) présent dans le véhicule automobile.
